# DEMANDE DE BREVET EUROPEEN

(11) **EP 0 781 694 A1**
(43) Date de publication de la demande: **02.07.1997**
(21) Numéro de dépôt: 96402877.3
(22) Date de dépôt: 24.12.1996
(51) Int. Cl.: B60T 7/20

(54) **Dispositif de commande de frein**

(30) Priorité: 29.12.1995 FR 9515733
(71) Demandeur: S.A. THIBAULT-ESSIEUX R.T.N., F-49490 Noyant (FR)
(72) Inventeur: Thibault, Alain, 49150 Bauge (FR)
(74) Mandataire: Dawidowicz, Armand

(57) **Abrégé**

Ce dispositif est caractérisé en ce qu'il comporte au moins deux éléments formant butée (B1, B2), dont l'un (B1) est solidaire des déplacements angulaires du levier (12), ces éléments formant butée (B1, B2) coopérant entre eux pour empêcher l'abaissement du levier (12) lors de sa course de retour au-delà d'une position prédéterminée, au moins l'un desdits deux éléments formant butée étant susceptible d'être déplacé ou commandé en déplacement par l'utilisateur pour permettre le désengagement des cliquets d'entraînement (4) et d'arrêt (5) au moins par abaissement du levier (12) au-delà de ladite position prédéterminée.

Application aux véhicules tractés.

## Description

La présente invention concerne un dispositif de commande de frein notamment pour remorque équipée d'un dispositif de freinage à inertie.

Les dispositifs de commande de frein, actionnés à la main, pour effectuer la traction d'un câble d'actionnement de frein sont bien connus. Un exemple d'un tel dispositif de commande est notamment décrit dans le brevet FR-A-2.618.742. De manière analogue à la présente invention, ce dispositif lie le câble de commande du frein à un organe tournant irréversible, tel qu'une roue à cliquet. Cet organe tournant irréversible coopère avec le levier manuel de manoeuvre de façon que l'actionnement du levier dans un sens entraîne la rotation de l'organe tournant dans la direction appliquée à une traction au câble de frein alors que le retour de levier à sa position de départ s'effectue à vide sans déplacement de l'organe tournant pour permettre ensuite d'effectuer par reprise une nouvelle course d'entraînement dudit organe tournant. Grâce à un tel système, il est possible par reprises successives d'appliquer au câble de commande du frein la force de traction nécessaire pour assurer l'immobilisation efficace de la remorque sans dépense d'énergie importante pour l'actionnement du levier de manoeuvre. Dans ce dispositif, le cliquet d'entraînement comporte une queue conçue pour, à la fin de la course de retour à vide du levier de manoeuvre, engager le cliquet d'arrêt du disque denté de telle façon qu'une poussée appliquée alors au levier de manoeuvre dégage le cliquet d'arrêt, contre l'action de son ressort, en assurant automatiquement le desserrage du frein. Un inconvénient d'un tel système est qu'il rend possible le desserrage du frein par erreur lorsque l'utilisateur applique une poussée trop importante sur le levier de manoeuvre. Un tel dispositif présente donc des risques importants de fausses manoeuvres au cours de son utilisation.

Le but de la présente invention est de pallier les inconvénients précités en proposant un dispositif de commande de frein qui oblige l'utilisateur à exercer une action positive sur ledit dispositif pour assurer le desserrage du frein sans risque de desserrage intempestif de ce dernier.

Un autre but de la présente invention est de proposer un dispositif de commande de freinage totalement fiable qui, en outre, supprime toute mise en tension d'un dispositif compensateur à ressort ou d'un compas à gaz.

A cet effet, l'invention a pour objet un dispositif de commande de frein, notamment pour remorque équipée d'un dispositif de freinage à inertie, du type comprenant, portés par un châssis, au moins un arbre, un secteur denté porté par ledit arbre et coopérant avec un cliquet d'arrêt ne permettant le déplacement angulaire du secteur denté que dans un sens, un levier manuel d'actionnement monté libre en pivotement sur ledit arbre et portant un cliquet d'entraînement qui, lors d'une course aller du levier, entraîne en déplacement angulaire le secteur denté qui agit directement ou indirectement sur une chape portant un câble de frein pour assurer une tension dudit câble, alors que la course de retour du levier manuel s'effectue sans déplacement dudit secteur denté, caractérisé en ce qu'il comporte au moins deux éléments formant butée, dont l'un est solidaire des déplacements angulaires du levier, ces éléments formant butée coopérant entre eux pour empêcher l'abaissement du levier lors de sa course de retour au-delà d'une position intermédiaire prédéterminée de verrouillage, au moins l'un desdits deux éléments formant butée étant susceptible d'être déplacé ou commandé en déplacement par l'utilisateur pour permettre le désengagement des cliquets d'entraînement et d'arrêt au moins par abaissement du levier au-delà de ladite position de verrouillage prédéterminée. Généralement, le premier élément formant butée solidaire des déplacements angulaires du levier constitue l'élément formant butée susceptible d'être déplacé ou commandé en déplacement par l'utilisateur.

Selon une forme de réalisation préférée de l'invention, le premier élément de butée, solidaire des déplacements angulaires du levier, est constitué d'une portion de tringle, telle qu'un pied de tringle qui, en position inactive de la tringle, correspondant à une position dans laquelle la tringle est rappelée élastiquement au moins partiellement en saillie de l'extrémité libre du levier, vient en butée contre le cliquet d'arrêt formant le second élément de butée pour empêcher, lors de la course de retour du levier, d'une part l'abaissement du levier au-delà d'une position intermédiaire prédéterminée de verrouillage, d'autre part le désengagement du cliquet d'avec le secteur denté. Le déplacement de la tringle par l'utilisateur dans le sens d'introduction de la tringle dans le levier provoque le pivotement du cliquet d'entraînement avec lequel est en prise l'extrémité ou pied de la tringle, dans un sens assurant le désengagement du cliquet d'entraînement du secteur denté et modifie le point d'appui de l'extrémité ou pied de ladite tringle sur le cliquet d'arrêt pour permettre par la suite l'abaissement du levier manuel au-delà de la position intermédiaire de blocage ou de verrouillage prédéterminée, cet abaissement assurant le pivotement du cliquet d'arrêt dans un sens permettant la libération du secteur denté et donc la détente du câble de frein.

L'invention sera bien comprise à la lecture de la description suivante d'un exemple de réalisation, en référence aux dessins annexés dans lesquels :
la figure 1 représente une vue en coupe d'une partie du dispositif de commande de frein située en amont de la roue dentée en position serrée dudit frein ;
la figure 2 représente le dispositif de la figure 1 en position desserrée et
la figure 3 représente une vue schématique partielle en perspective de l'ensemble du dispositif de commande de frein.

Le dispositif de commande de frein, objet de l'invention, est plus particulièrement destiné à être utilisé avec un dispositif de freinage à inertie du type de celui décrit dans le brevet FR-A-2.642.384. Ce dispositif de freinage à inertie comprend notamment un écarteur qui agit sur les mâchoires du frein pour procurer un couple de freinage, cet écarteur étant actionné au moyen d'un câble dont la tension ou le relâchement sont commandés au moyen du dispositif de commande objet de l'invention. Le dispositif de commande de frein et le dispositif de freinage associé sont plus particulièrement destinés à équiper des véhicules tractés, notamment des remorques.

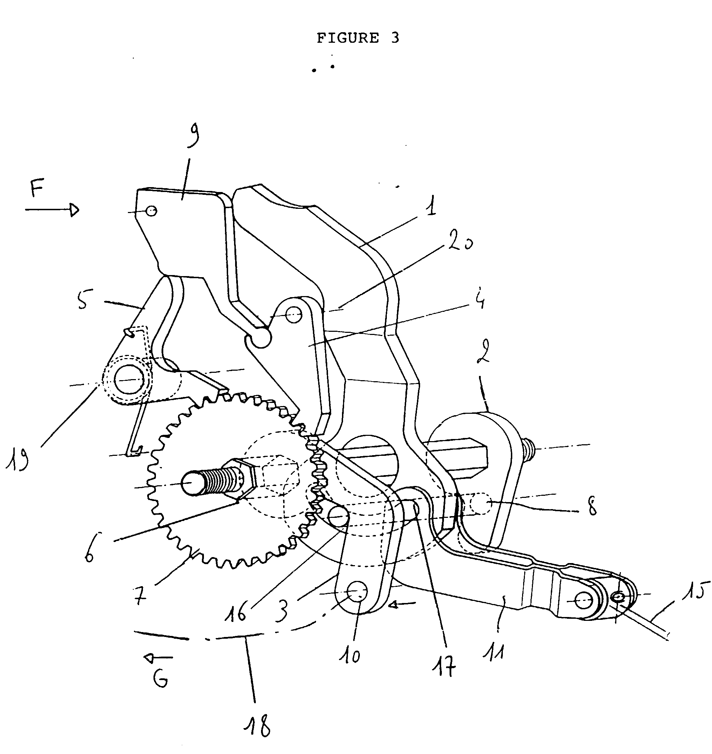

Le dispositif de commande de frein, objet de l'invention, est constitué d'un châssis (non représenté). Sur le châssis du dispositif est monté un arbre 6 destiné à tourner dans des paliers portés par ledit châssis. Cet arbre 6, tel que représenté, est un arbre hexagonal à six pans qui permet l'entraînement d'un certain nombre de pièces. Comme le montre la figure 3, un secteur denté 7 est monté solidaire sur une extrémité de cet arbre 6. Sur le châssis du dispositif, à proximité du secteur denté 7, représenté en l'occurrence ici sous forme d'une roue dentée, un cliquet d'arrêt 5 est monté sur un axe 19. Ce cliquet d'arrêt 5 affecte la forme d'un levier à deux bras. L'un des bras dudit cliquet d'arrêt est maintenu en contact avec le secteur denté 7 au moyen d'un ressort, tandis que l'autre bras présente une surface de réception et d'appui d'un pied de tringle 9 qui sera décrit ci-après. Le bras du cliquet d'arrêt destiné à venir en prise avec le secteur denté 7 empêche le déplacement dudit secteur denté 7 dans le sens anti-horaire dans l'exemple représenté à la figure 3.

Outre les éléments décrits ci-dessus, le dispositif de commande de frein comporte un levier manuel d'actionnement 12 monté libre en pivotement sur ledit arbre 6. Ce levier manuel d'actionnement porte un cliquet d'entraînement 4 articulé autour d'un axe 20. Ce cliquet 4 présente un bec conçu pour engager, sous l'action d'un ressort non représenté, les dents du secteur denté 7 de façon qu'une traction exercée sur le levier 12, dans le sens horaire dans la figure 3, entraîne un déplacement angulaire du secteur denté 7 dans le même sens. Cette traction sur le levier correspond à une course aller du levier 12. Lors de cette course aller du levier 12, le déplacement angulaire du secteur 7 entraîne par suite un déplacement de l'arbre 6 qui agit alors sur une chape 11 portant un câble de frein 15 pour assurer une tension dudit câble. A l'inverse, lors de la course de retour du levier manuel 12, le bec du cliquet d'entraînement 4 saute de dent en dent sans assurer aucun déplacement du secteur denté 7. Dans ce cas, le secteur denté 7 est immobilisé en position par le cliquet d'arrêt 5.

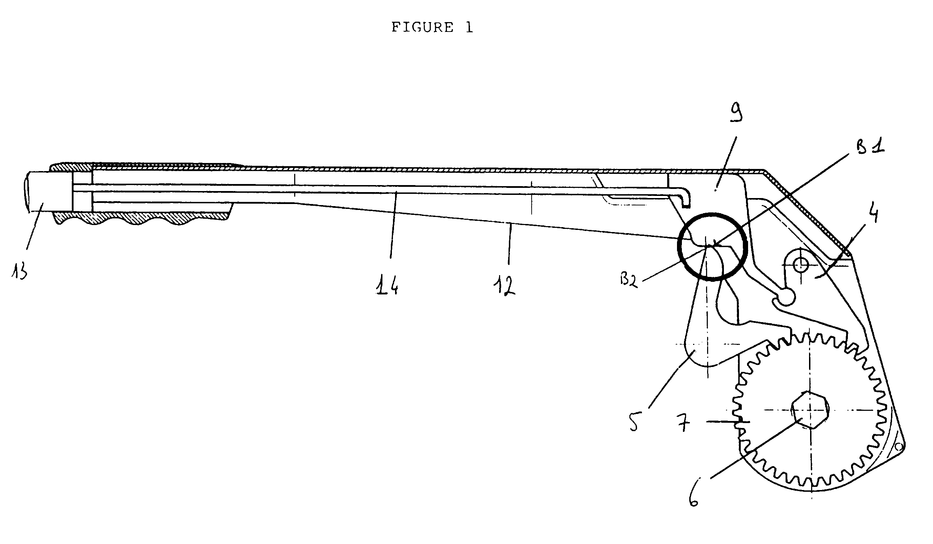

Le dispositif comporte encore au moins deux éléments formant butée B1, B2, ces deux éléments coopérant entre eux pour empêcher l'abaissement du levier 12 lors de sa course de retour au-delà d'une position intermédiaire prédéterminée de verrouillage. Dans cette position intermédiaire prédéterminée de verrouillage, cliquet d'entraînement 4 et cliquet d'arrêt 5 sont en position active pour assurer respectivement l'un un déplacement angulaire du secteur denté 7, l'autre une immobilisation en position dudit secteur denté 7 pour maintenir l'effet de freinage obtenu. Généralement, l'un des éléments formant butée, encore appelé premier élément de butée B1, est solidaire des déplacements angulaires du levier 12. Dans l'exemple représenté à la figure 1, ce premier élément de butée B1 est constitué par le pied de tringle 9 d'une tringle 14. Toutefois, de nombreuses autres solutions peuvent être retenues. Ainsi, ce premier élément de butée pourrait être constitué par une butée pivotante, telle qu'un organe saillant, disposée à l'extérieur du levier sur le corps de ce dernier. Ce premier élément de butée B1 est destiné à coopérer avec un second élément de butée B2 disposé en un point quelconque du dispositif de manière à empêcher l'abaissement du levier lors de sa course de retour au-delà d'une position prédéterminée. En conséquence, le second élément de butée sera généralement disposé par rapport au premier élément de butée de manière telle que, lors de la course du retour du levier 12, le premier élément de butée vient en appui contre le second élément de butée. Dans l'exemple représenté à la figure 1, ce second élément de butée est constitué par le cliquet d'arrêt 5. Là encore, ceci ne constitue qu'un exemple de réalisation de l'invention. Ce second élément de butée pourrait être disposé en un point quelconque du châssis ou être porté par tout autre organe que le cliquet d'arrêt 5, à l'exception du levier 12.

Au moins l'un desdits éléments formant butée est susceptible d'être déplacé ou commandé en déplacement par l'utilisateur pour permettre le désengagement des cliquets d'entraînement 4 et d'arrêt 5, notamment par abaissement de levier 12 au-delà de ladite position prédéterminée. Là encore, cette opération de désengagement du cliquet d'entraînement et du cliquet d'arrêt peut affecter un grand nombre de modes de réalisation. Dans certains cas, le cliquet d'entraînement 4 viendra lui-même agir sur le cliquet d'arrêt 5 pour désengager le cliquet d'arrêt alors que, dans d'autres cas, les désengagements des cliquets d'entraînement et des cliquets d'arrêt seront indépendants. Du fait des grands nombres de modes de réalisation envisagés, il sera décrit ci-après uniquement un mode de réalisation préféré de l'invention. Ce mode de réalisation présente l'avantage de permettre à l'utilisateur de procéder à l'opération de desserrage du frein au moyen d'une seule main et offre en outre toute la sécurité requise dans la mesure où, lors de la course aller du levier, l'utilisateur n'a pas à vérifier que l'élément de butée mobile a bien été repositionné en position pour procéder à l'opération de serrage.

Dans le mode de réalisation préféré de l'invention, au cours de l'opération de serrage ayant pour objet d'imprimer une tension au câble de frein 15, une tringle 14 disposée à l'intérieur du levier manuel 12 occupe une position dite inactive. Dans cette position inactive de la tringle 14, la tringle est rappelée élastiquement au moins partiellement en saillie de l'extrémité libre du levier 12 au moyen d'un organe de rappel approprié non représenté. L'extrémité de la tringle qui fait saillie du levier délimite un bouton de commande 13 facilitant le maniement de ladite tringle. Cette position inactive de la tringle correspond à celle représentée à la figure 1.

Lors de l'opération de serrage, un pied de tringle 9, solidaire de la tringle 14, vient, au cours de la course de retour du levier manuel 12, en butée en un point d'appui du cliquet d'arrêt 5 de manière à empêcher d'une part l'abaissement du levier 12 au-delà d'une position prédéterminée lors de cette même course de retour, d'autre part le désengagement dudit cliquet 5 d'avec le secteur denté 7. Cette position en butée du pied de tringle 9 contre le cliquet d'arrêt 5 interdit toute fausse manoeuvre par l'utilisateur. En effet, même si l'utilisateur exerce une poussée trop importante sur le levier 12 lors de la course de retour de ce levier, il n'a aucune possibilité de desserrer le frein. Au contraire, plus la poussée sur le levier sera forte, plus le désengagement du cliquet d'arrêt 5 d'avec le secteur denté 7 sera impossible. Une telle butée n'empêche toutefois pas le levier manuel d'actionnement 12 d'occuper une position sensiblement horizontale lorsque l'opération de serrage du frein est terminée. Cette position horizontale du levier 12 après serrage est importante car elle facilite par exemple l'accès au coffre des caravanes.

Au cours de l'opération de serrage, l'arbre 6, déplacé angulairement grâce au cliquet d'entraînement 4 entraînant en déplacement angulaire le secteur denté 7, vient en appui, grâce à au moins un levier de traction 3 dont il est équipé, sur un axe 8 solidaire de la chape 11 qui porte le câble de frein 15. L'appui du levier de traction 3 sur l'axe 8 entraîne en déplacement ladite chape 11 pour assurer une tension du câble de frein 15. Dans l'exemple représenté à la figure 3, l'arbre 6 est équipé de deux leviers de traction 2 et 3 de manière à exercer d'une part un appui suffisamment important sur l'arbre 8 solidaire en déplacement de la chape et, d'autre part, permettre à l'ensemble du dispositif de présenter une solidité suffisante.

Cet axe 8 solidaire de la chape 11 traverse une lumière 16 d'une bielle 1 montée libre à rotation sur l'arbre 6. L'un des bords 17 de cette lumière 16 est susceptible d'entraîner en déplacement l'axe 8 sous l'action d'un effort F dû à la poussée de la remorque lors par exemple d'un freinage. Le déplacement de l'axe 8 assure, de manière analogue à ce qui a été décrit ci-dessus, par déplacement de la chape 11, une tension du câble de frein 15. Le levier de traction 3 est en outre équipé, en 10 sur la figure 3, d'un câble de rupture 18 reliant ledit levier de traction 3 au véhicule moteur. Ce câble de rupture 18, encore appelé câble de sécurité, permet, lorsque qu'un effort G lui est appliqué, d'entraîner en déplacement le levier de traction 3 qui assure ainsi, par son appui sur l'axe 8, une tension du câble de frein tout en faisant tourner le secteur denté 7. Après rupture du câble de sécurité 18, le serrage du frein et maintenu par les cliquets 4 et 5. Ce câble de sécurité 18 joue pleinement son rôle lorsque, par exemple, la remorque se décroche du véhicule moteur.

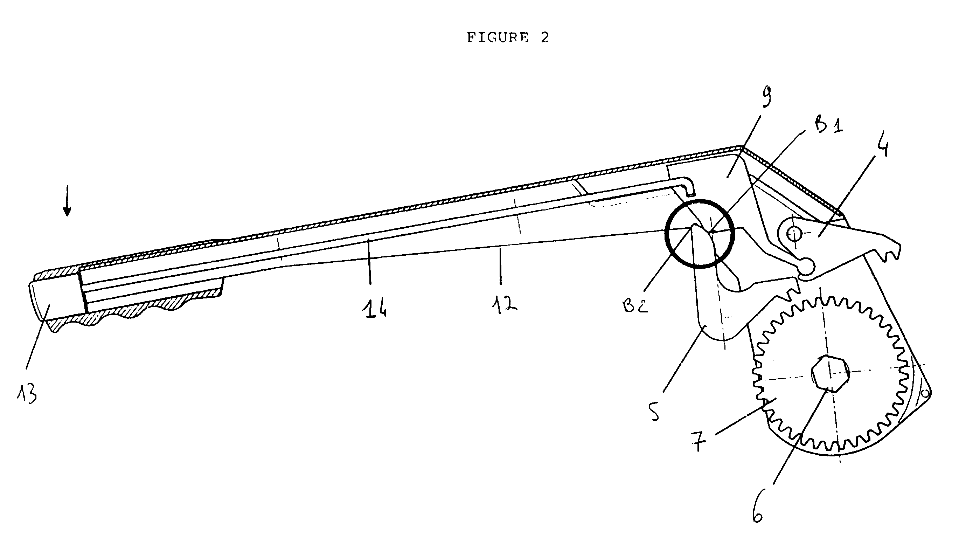

L'opération de desserrage, au moyen d'un tel dispositif de commande de frein, s'effectue de la manière suivante. Le déplacement de la tringle 14, solidaire du pied de tringle 9 dans le sens d'introduction de la tringle dans le levier 12, provoque le pivotement du cliquet d'entraînement 4 avec lequel le pied de tringle 9 est en prise, dans un sens assurant le désengagement du cliquet d'entraînement 4 du secteur denté 7. Simultanément, ce déplacement de la tringle 14 et, donc, du pied de tringle 9 modifie le point d'appui du pied de tringle 9 sur le cliquet d'arrêt 5. Cette modification permet, comme le montre la figure 2, l'abaissement du levier manuel 12 au-delà de la position de blocage prédéterminée, cet abaissement assurant le pivotement du cliquet d'arrêt 5 dans un sens permettant la libération du secteur denté 7 et donc la détente du câble de frein 15. Dès que le bouton 13 de commande de la tringle 14 est relâché par l'utilisateur, la tige 14 revient dans sa position inactive, conforme à celle représentée à la figure 1, de telle sorte que le cliquet d'arrêt 5, rappelé au moyen de son ressort dans sa position en prise avec le secteur denté 7, permet à nouveau la réalisation d'une opération de serrage. De même, le retour de la tringle 14 et, donc, du pied de tringle 9 dans une position correspondant à une position inactive de la tringle 14, permet le pivotement du cliquet d'entraînement 4 dans une position, correspondant à la figure 1, dans laquelle il est à nouveau en prise avec le secteur denté 7 pour l'entraîner en déplacement.

En conséquence de ce qui est mentionné ci-dessus, l'opération de desserrage s'effectue en deux temps. Elle nécessite tout d'abord une translation de la tringle 14 et du pied de tringle 9 à l'intérieur du levier 12 pour assurer le désengagement du cliquet 4 d'avec le secteur denté 7 puis, dans un second temps, l'abaissement du levier 12 pour permettre le pivotement du cliquet d'arrêt 5 et donc la libération du secteur denté 7, ce qui permet la détente du câble de frein 15. On constate que, grâce à ce mode de réalisation, le désengagement du cliquet d'entraînement 4 d'avec le secteur denté 7 et le désengagement du cliquet d'arrêt 5 d'avec le secteur denté 7 sont réalisés de manière indépendante sans que le cliquet d'entraînement 4 ne vienne à aucun moment en appui ou en prise avec le cliquet d'arrêt 5. Toutefois, un mode de réalisation dans lequel le cliquet d'entraînement 4 viendrait au cours de l'abaissement du levier 12 en appui sur le cliquet d'arrêt 5 pour le désengager du secteur denté est également envisageable.

On note également dans un tel dispositif que, que ce soit en utilisation routière ou que ce soit en position dite "frein de stationnement" ou que ce soit en position dite de sécurité, c'est toujours le même organe, à savoir l'axe 8, qui commande la tension du câble de frein 15. Le déplacement de cet axe 8 peut être réalisé par l'intermédiaire de plusieurs pièces de commande qui sont constituées soit par les leviers de traction 2 et 3, soit par la bielle 1, soit par le câble de rupture ou de sécurité 18 lui-même agissant sur le levier de traction 3. Ceci permet de simplifier grandement l'ensemble du dispositif de commande de frein.

## Revendications

1. Dispositif de commande de frein, notamment pour remorque équipée d'un dispositif de freinage à inertie, du type comprenant, portés par un châssis, au moins un arbre (6), un secteur denté (7) porté par ledit arbre (6) et coopérant avec un cliquet d'arrêt (5) ne permettant le déplacement angulaire du secteur denté (7) que dans un sens, un levier manuel d'actionnement (12) monté libre en pivotement sur ledit arbre (6) et portant un cliquet d'entraînement (4) qui, lors d'une course aller du levier (12), entraîne en déplacement angulaire le secteur denté (7) qui agit directement ou indirectement sur une chape (11) portant un câble de frein (15) pour assurer une tension dudit câble, alors que la course de retour du levier manuel (12) s'effectue sans déplacement dudit secteur denté (7),
caractérisé en ce qu'il comporte au moins deux éléments formant butée (B1, B2), dont l'un (B1) est solidaire des déplacements angulaires du levier (12), ces éléments formant butée (B1, B2) coopérant entre eux pour empêcher l'abaissement du levier (12) lors de sa course de retour au-delà d'une position intermédiaire prédéterminée de verrouillage, au moins l'un desdits deux éléments formant butée étant susceptible d'être déplacé ou commandé en déplacement par l'utilisateur pour permettre le désengagement des cliquets d'entraînement (4) et d'arrêt (5) au moins par abaissement du levier (12) au-delà de ladite position prédéterminée.

2. Dispositif de commande de frein selon la revendication 1,
caractérisé en ce que le premier élément formant butée (B1) solidaire des déplacements angulaires du levier (12) constitue l'élément formant butée susceptible d'être déplacé ou commandé en déplacement par l'utilisateur.

3. Dispositif de commande de frein selon la revendication 1,
caractérisé en ce que le premier élément de butée (B1), solidaire des déplacements angulaires du levier (12), est contitué d'une portion de tringle (14), telle qu'un pied de tringle (9) qui, en position inactive de la tringle (14), correspondant à une position dans laquelle la tringle (14) est rappelée élastiquement au moins partiellement en saillie de l'extrémité libre du levier (12), vient en butée contre le cliquet d'arrêt (5) formant le second élément de butée pour empêcher, lors de la course de retour du levier (12), d'une part l'abaissement du levier au-delà d'une position prédéterminée, d'autre part le désengagement du cliquet (5) d'avec le secteur denté (7).

4. Dispositif de commande de frein selon la revendication 3,
caractérisé en ce que le déplacement de la tringle (14) par l'utilisateur dans le sens d'introduction de la tringle dans le levier (12) provoque le pivotement du cliquet d'entraînement (4) avec lequel est en prise, l'extrémité ou pied (9) de la tringle (14) dans un sens assurant le désengagement du cliquet d'entraînement (4) du secteur denté (7) et modifie le point d'appui de l'extrémité ou pied (9) de ladite tringle (14) sur le cliquet d'arrêt (5) pour permettre par la suite l'abaissement du levier manuel (12) au-delà de la position de blocage prédéterminée, cet abaissement assurant le pivotement du cliquet d'arrêt (5) dans un sens permettant la libération du secteur denté (7) et, donc, la détente du câble de frein.

5. Dispositif de commande de frein selon la revendication 1,
caractérisé en ce que l'arbre (6) est équipé d'au moins un levier de traction (3) qui, au cours du déplacement angulaire de l'arbre (6), vient en appui sur un axe (8) solidaire de la chape (11) portant le câble de frein (15) de manière à entraîner en déplacement ladite chape (11) pour assurer une tension du câble (15).

6. Dispositif de commande de frein selon la revendication 3,
caractérisé en ce que le levier de traction (3) est équipé d'un câble de rupture (18) reliant ledit levier au véhicule moteur.

7. Dispositif de commande de frein selon la revendication 3,
caractérisé en ce que l'axe (8) solidaire de la chape (11) traverse une lumière (16) d'une bielle (1) montée libre à rotation sur l'arbre (6), l'un des bords (17) de cette lumière (16) étant susceptible d'entraîner en déplacement ledit axe (8) sous l'action d'un effort dû à la poussée de la remorque lors d'un freinage, le déplacement de l'axe (8) assurant par déplacement de la chape (11) une tension du câble de frein (15).

8. Dispositif de commande de frein selon la revendication 1,
caractérisé en ce que le cliquet d'arrêt (5) affecte la forme d'un levier à deux bras, dont l'un des bras est maintenu en contact avec le secteur denté (7) au moyen d'un ressort tandis que l'autre bras présente une surface de réception et d'appui dudit pied de tringle (9).
